# EUROPEAN PATENT APPLICATION

(11) **EP 4 753 221 A1**
(43) Date of publication of application: **03.06.2026**
(21) Application number: 24867098.6
(22) Date of filing: 26.07.2024
(51) Int. Cl.: H04L 41/0246

(54) **NETWORK MANAGEMENT OPERATION INSTRUCTION EXECUTION METHOD, APPARATUS, SYSTEM AND STORAGE MEDIUM**

(30) Priority: 22.09.2023 CN 202311237324
(71) Applicant: HUAWEI TECHNOLOGIES CO., LTD., Shenzhen 518129 (CN)
(72) Inventor: YE, Shuxin, Shenzhen, Guangdong 518129 (CN); LI, Yexing, Shenzhen, Guangdong 518129 (CN); YU, Yijun, Shenzhen, Guangdong 518129 (CN)
(74) Representative: Goddar, Heinz J.
(86) International application number: PCT/CN2024/107976
(87) International publication number: WO 2025/060681

(57) **Abstract**

An execution method and apparatus for a network management operation instruction, a system, and a storage medium are provided. A network management service consumer entity sends request information to a network management service provider entity, where the request information is used for requesting simulation of applying the network management operation instruction to a physical network; the provider entity determines that effect of the simulation meets a requirement; and the network management service provider entity sends the network management operation instruction to the physical network. The network management service provider entity is allowed to send the network management operation instruction to the physical network when the effect of the simulation meets the requirement, thereby reducing a plurality of interactions among the network management service consumer entity, the network management service provider entity, and the physical network, reducing a delay in executing the network management operation instruction, and improving execution efficiency of the network management operation instruction.

## Description

This application claims priority to Chinese Patent Application No. 202311237324.2, filed with the China National Intellectual Property Administration on September 22, 2023 and entitled "EXECUTION METHOD AND APPARATUS FOR NETWORK MANAGEMENT OPERATION INSTRUCTION, SYSTEM, AND STORAGE MEDIUM", which is incorporated herein by reference in its entirety.

### TECHNICAL FIELD

This application relates to the field of communication technologies, and in particular, to an execution method and apparatus for a network management operation instruction, a system, and a storage medium.

### BACKGROUND

An important application of a network twin is simulation. In simulation, a network twin in a network management service provider entity can securely simulate impact, on a physical network, of applying a specific network management operation instruction to the physical network, for example, simulate a network element energy saving solution. The network management service provider entity returns effect of the simulation to a network management service consumer entity. In some scenarios, when the effect of the simulation meets a requirement, the network management service consumer entity may need to send the network management operation instruction to the physical network.

However, in conventional technologies, the network management service provider entity needs to return the effect of the simulation to the network management service consumer entity, and the network management service consumer entity sends the network management operation instruction to the physical network only after determining that the effect of the simulation meets the requirement. An interaction procedure is complex and a quantity of interactions is large. Finally, this causes a long interaction delay, and is not conducive to sending the network management operation instruction to the physical network in a timely manner.

### SUMMARY

This application provides an execution method and apparatus for a network management operation instruction, a system, and a storage medium, to reduce a quantity of interactions among a network management service consumer entity, a network management service provider entity, and a physical network, reduce a delay in sending the network management operation instruction to the physical network, and improve execution efficiency of the network management operation instruction.

According to a first aspect, an execution method for a network management operation instruction is provided. The method may be performed by a network management service provider entity, or may be performed by a chip or a circuit configured in the network management service provider entity, or may be performed by a logical module or software that can implement all or some functions of the network management service provider entity. This is not limited in this application.

The method includes: The network management service provider entity receives request information, where the request information is used for requesting simulation of applying the network management operation instruction to a physical network; the network management service provider entity determines that effect of the simulation meets a requirement; and the network management service provider entity sends the network management operation instruction to the physical network.

In this aspect, the network management service provider entity is allowed to send the network management operation instruction to the physical network when the effect of the simulation meets the requirement, thereby reducing a plurality of interactions among a network management service consumer entity, the network management service provider entity, and the physical network, reducing a delay in executing the network management operation instruction, and improving execution efficiency of the network management operation instruction.

In a possible implementation, the request information includes indication information indicating to send the network management operation instruction to the physical network when it is determined that the effect of the simulation meets the requirement.

In this implementation, the indication information may explicitly indicate that, the network management service provider entity is allowed to send the network management operation instruction to the physical network when the effect of the simulation meets the requirement.

In another possible implementation, the requirement is pre-stored.

In another possible implementation, the request information further includes the requirement.

In another possible implementation, the network management operation instruction includes one of the following parameters: at least one physical network object, and a parameter configuration corresponding to each of the at least one physical network object.

In another possible implementation, the method further includes: While simulating the network management operation instruction, the network management service provider entity performs a preparation operation of sending the network management operation instruction to the physical network.

In this implementation, after receiving the request information, the network management service provider entity determines that the network management service consumer entity allows the network management service provider entity to send the network management operation instruction to the physical network when the effect of the simulation meets the requirement. In this case, while simulating the network management operation instruction, the network management service provider entity performs the preparation operation of sending the network management operation instruction to the physical network, to improve the execution efficiency of the network management operation instruction.

For example, a preparation operation for executing the network management operation instruction may be converting, via a converter, middleware, or a network configuration protocol similar to YANG or NetCONF, a network management operation instruction that needs to be delivered, to implement communication between a network management system and a network device.

In another possible implementation, the method further includes: The network management service provider entity sends response information. The response information includes at least one of the effect of the simulation and an execution result of the network management operation instruction, and the execution result of the network management operation instruction indicates whether the network management operation instruction is successfully sent to the physical network.

In this implementation, the network management service provider entity sends the response information to explicitly indicate the simulation result and/or the execution result of the network management operation instruction.

According to a second aspect, an execution method for a network management operation instruction is provided. The method may be performed by a network management service consumer entity, or may be performed by a chip or a circuit configured in the network management service consumer entity, or may be performed by a logical module or software that can implement all or some functions of the network management service consumer entity. This is not limited in this application.

The method includes: The network management service consumer entity determines request information, where the request information is used for requesting simulation of applying the network management operation instruction to a physical network, and indicates to send the network management operation instruction to the physical network when it is determined that effect of the simulation meets a requirement; and the network management service consumer entity sends the request information.

In this aspect, the network management service consumer entity allows a network management service provider entity to send the network management operation instruction to the physical network when the effect of the simulation meets the requirement, thereby reducing a plurality of interactions among the network management service consumer entity, the network management service provider entity, and the physical network, reducing a delay in executing the network management operation instruction, and improving execution efficiency of the network management operation instruction.

In a possible implementation, the requirement is pre-stored.

In another possible implementation, the request information further includes the requirement.

In another possible implementation, the network management operation instruction includes one of the following parameters: at least one physical network object, and a parameter configuration corresponding to each of the at least one physical network object.

In another possible implementation, the method further includes: The network management service consumer entity receives response information. The response information includes at least one of the effect of the simulation and an execution result of the network management operation instruction, and the execution result of the network management operation instruction indicates whether the network management operation instruction is successfully sent to the physical network.

According to a third aspect, an execution method for a network management operation instruction is provided. The method includes: A network management service consumer entity sends request information to a network management service provider entity, where the request information is used for requesting simulation of applying the network management operation instruction to a physical network; the network management service provider entity determines that effect of the simulation meets a requirement; and the network management service provider entity sends the network management operation instruction to the physical network.

According to a fourth aspect, an execution apparatus for a network management operation instruction is provided, and can implement the method for the network management service provider entity according to the first aspect or any one of the implementations of the first aspect. For example, the network management service provider entity may be a chip or a circuit. The foregoing method may be implemented by software, hardware, or hardware executing corresponding software.

In a possible implementation, the apparatus includes a transceiver unit and a processing unit. The transceiver unit is configured to receive request information, where the request information is used for requesting simulation of applying the network management operation instruction to a physical network. The processing unit is configured to determine that effect of the simulation meets a requirement. The transceiver unit is further configured to send the network management operation instruction to the physical network.

Optionally, the request information includes indication information. The indication information includes indication information indicating to send the network management operation instruction to the physical network when it is determined that the effect of the simulation meets the requirement.

Optionally, the requirement is pre-stored.

Optionally, the request information further includes the requirement.

Optionally, the network management operation instruction includes one of the following parameters: at least one physical network object, and a parameter configuration corresponding to each of the at least one physical network object.

Optionally, the processing unit is further configured to: while simulating the network management operation instruction, perform a preparation operation of sending the network management operation instruction to the physical network.

Optionally, the transceiver unit is further configured to send response information. The response information includes at least one of the effect of the simulation and an execution result of the network management operation instruction, and the execution result of the network management operation instruction indicates whether the network management operation instruction is successfully sent to the physical network.

According to a fifth aspect, an execution apparatus for a network management operation instruction is provided, and can implement the method for the network management service consumer entity according to the second aspect or any one of the implementations of the second aspect. For example, the network management service consumer entity may be a chip or a circuit. The foregoing method may be implemented by software, hardware, or hardware executing corresponding software.

In a possible implementation, the apparatus includes a transceiver unit and a processing unit. The processing unit is configured to determine request information, where the request information is used for requesting simulation of applying the network management operation instruction to a physical network, and indicates to send the network management operation instruction to the physical network when it is determined that effect of the simulation meets a requirement. The transceiver unit is configured to send the request information.

Optionally, the requirement is pre-stored.

Optionally, the request information further includes the requirement.

Optionally, the network management operation instruction includes one of the following parameters: at least one physical network object, and a parameter configuration corresponding to each of the at least one physical network object.

Optionally, the transceiver unit is further configured to receive response information. The response information includes at least one of the effect of the simulation and an execution result of the network management operation instruction, and the execution result of the network management operation instruction indicates whether the network management operation instruction is successfully sent to the physical network.

With reference to the fourth aspect, the fifth aspect, or either of the fourth aspect and the fifth aspect, in another possible implementation, the execution apparatus for the network management operation instruction in the fourth aspect, the fifth aspect, or either of the fourth aspect and the fifth aspect includes a processor coupled to a memory. The processor is configured to support the apparatus in performing a corresponding function in the foregoing execution method for the network management operation instruction. The memory is configured to be coupled to the processor, and stores a program (instructions) and/or data necessary for the apparatus. Optionally, the execution apparatus for the network management operation instruction may further include a communication interface, configured to support communication between the apparatus and another network element. Optionally, the memory may be located inside the execution apparatus for the network management operation instruction, or may be located outside the execution apparatus for the network management operation instruction.

With reference to the fourth aspect, the fifth aspect, or either of the fourth aspect and the fifth aspect, in still another possible implementation, the execution apparatus for the network management operation instruction in the fourth aspect, the fifth aspect, or either of the fourth aspect and the fifth aspect includes a processor and a transceiver apparatus. The processor is coupled to the transceiver apparatus. The processor is configured to execute a computer program or instructions, to control the transceiver apparatus to receive and send information. When the processor executes the computer program or the instructions, the processor is further configured to implement the foregoing method by using a logic circuit or by executing code instructions. The transceiver apparatus may be a transceiver, a transceiver circuit, or an input/output interface, and is configured to: receive a signal from an apparatus other than the execution apparatus for the network management operation instruction and transmit the signal to the processor, or send a signal from the processor to an apparatus other than the execution apparatus for the network management operation instruction. When the execution apparatus for the network management operation instruction is a chip, the transceiver apparatus is a transceiver circuit or an input/output interface.

When the execution apparatus for the network management operation instruction in the fourth aspect, the fifth aspect, or either of the fourth aspect and the fifth aspect is a chip or a chip module, a sending unit may be an output unit, for example, an output circuit or a communication interface, and a receiving unit may be an input unit, for example, an input circuit or a communication interface. When the execution apparatus for the network management operation instruction is a terminal or an access network device, the sending unit may be a transmitter or a transmitter machine, and the receiving unit may be a receiver or a receiver machine.

According to a sixth aspect, a synchronization system for a network management operation instruction is provided, and includes the execution apparatus for the network management operation instruction according to the fourth aspect or any one of the implementations of the fourth aspect and the execution apparatus for the network management operation instruction according to the fifth aspect or any one of the implementations of the fifth aspect.

According to a seventh aspect, a computer-readable storage medium is provided. The computer-readable storage medium stores a computer program or instructions. When a computer executes the computer program or the instructions, the methods in the foregoing aspects are implemented.

According to an eighth aspect, a computer program product including instructions is provided. When the instructions are run on an execution apparatus for a network management operation instruction, the execution apparatus for the network management operation instruction is caused to perform the methods in the foregoing aspects.

### BRIEF DESCRIPTION OF DRAWINGS

FIG. 1a is a diagram of an example of simulation according to an embodiment of this application;
FIG. 1b is a diagram of an example of simulation and network management operation instruction execution according to an embodiment of this application;
FIG. 1c is a diagram of an example of other simulation and network management operation instruction execution according to an embodiment of this application;
FIG. 2 is a diagram of an overall procedure of simulation and network management operation instruction execution according to an embodiment of this application;
FIG. 3 is a diagram of an architecture of an execution system for a network management operation instruction according to an embodiment of this application;
FIG. 4 is a schematic flowchart of an execution method for a network management operation instruction according to an embodiment of this application;
FIG. 5 is a schematic flowchart of another execution method for a network management operation instruction according to an embodiment of this application;
FIG. 6 is a schematic flowchart of still another execution method for a network management operation instruction according to an embodiment of this application;
FIG. 7 is a diagram of a structure of an execution apparatus for a network management operation instruction according to an embodiment of this application; and
FIG. 8 is a diagram of a structure of another execution apparatus for a network management operation instruction according to an embodiment of this application.

### DESCRIPTION OF EMBODIMENTS

The following describes embodiments of this application with reference to the accompanying drawings in embodiments of this application.

"At least one piece (item)" described in this application below indicates one piece (item) or more pieces (items). "A plurality of (items)" means two (items) or more (items). The term "and/or" describes an association relationship between associated objects and indicates that three relationships may exist. For example, A and/or B may indicate the following three cases: Only A exists, both A and B exist, and only B exists. The character "/" generally indicates an "or" relationship between the associated objects. In addition, it should be understood that although the terms "first", "second", and the like may be used in this application to describe objects, these objects are not limited by these terms. These terms are merely used to distinguish the objects from each other. The terms "first", "second", and the like are merely intended for a purpose of description, and shall not be understood as an indication or implication of relative importance or an implicit indication of a quantity of indicated technical features. Therefore, a feature limited by "first", "second", or the like may explicitly or implicitly include one or more features. In the descriptions of this application, unless otherwise specified, "a plurality of' means two or more.

Terms "including", "having", and any other variant thereof mentioned in descriptions of this application below are intended to cover a non-exclusive inclusion. For example, a process, a method, a system, a product, or a device that includes a series of steps or units is not limited to the listed steps or units, but optionally further includes other unlisted steps or units, or optionally further includes another inherent step or unit of the process, the method, the product, or the device. It should be noted that, in this application, a word like "example" or "for example" is used to represent giving an example, an illustration, or a description. Any method or design scheme described as an "example" or "for example" in this application should not be explained as being more preferred or advantageous than another method or design scheme. Exactly, use of the word like "example" or "for example" is intended to present a related concept in a specific manner.

The following describes implementations of this application by using specific embodiments. A person skilled in the art may understand other advantages and effects of this application based on content disclosed in this specification. Although description of this application is provided with reference to example embodiments, this does not mean that features of this application are limited to this implementation. On the contrary, a purpose of describing this application with reference to an implementation is to cover another option or modification that may be derived based on the claims of this application. To improve an in-depth understanding of this application, the following descriptions include a plurality of specific details. This application may alternatively be implemented without using these details. In addition, to avoid confusion or blurring a focus of this application, some specific details are omitted from the description. It should be noted that embodiments of this application and the features in embodiments may be mutually combined in the case of no conflict.

A digital twin (digital twin, DT) is a technology that is increasingly popular and that is related to system automation. The DT is a virtual copy of a real-world system, that is, a "physical" system, on which operations can be performed. Faced with continuously increasing quantity of service types, a continuously increasing scale, and continuously increasing complexity, a communication network also needs to use the digital twin technology to explore a better solution beyond a physical network. A network twin is an application of the digital twin technology to the field of communication networks, and aims to develop various network applications and implement efficient data-driven network management and maintenance.

The network twin is a digital twin whose physical counterpart is a communication network or a part of the communication network. The communication network may include, for example, a physical network element and component, a virtual network function (virtual network function, VNF) (to be specific, a network function element instantiated as a software-based entity), and a physical host, a service, and traffic that are used for the VNF.

Specifically, the network twin means that a digital mirror of the physical network (physical network) is established in a digitalized manner, and the physical network is digitalized by using historical network data, real-time network data, and an algorithm model of the physical network, to implement synchronous analysis and prediction on the physical network, and improve and optimize the physical network. That is, the network twin includes a digital representation of the physical network, and is used for simulating the physical network. The digital representation includes the algorithm model, the data, and the like. The network twin may also be referred to as a network twin entity. This is not limited in this application. The physical network is a network formed by connecting various physical devices or network elements (for example, a host, a router, and a switch) and a medium (an optical cable, a cable, a twisted pair, or the like) in a network. The physical network may be a mobile access network, a transport network, a mobile core network, a backbone network, or the like. The physical network may alternatively be a data center network, a campus network, an industrial internet of things, or the like. Network data may also be referred to as network running data, indicates a running status of the physical network, and may be configuration parameters, alarm data, performance data, and the like of the physical devices or the network elements.

To better simulate and test a plurality of scenarios in the physical network, a network management service provider entity needs to update the network twin based on the running status of the physical network. More frequent interactions between the network management service provider entity and the physical network indicates more timely data collection and more accurate simulation and prediction effects. Therefore, strict requirements are proposed on accuracy, timeliness, and interactivity of a network data collection and feedback process of the physical network.

An important application of the network twin is simulation. In simulation, the network twin serves as a secure sandbox to securely verify impact, on the physical network, of sending a specific network management operation instruction to the physical network, for example, verify a network element energy saving solution. The network twin may also model a real network behavior to obtain an estimation of an expected network behavior, for example, may be used for delay prediction and network fault prediction.

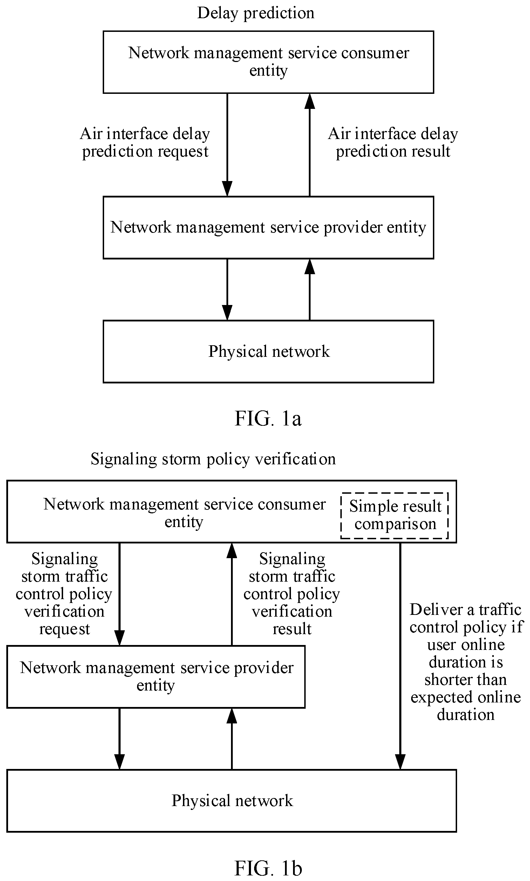

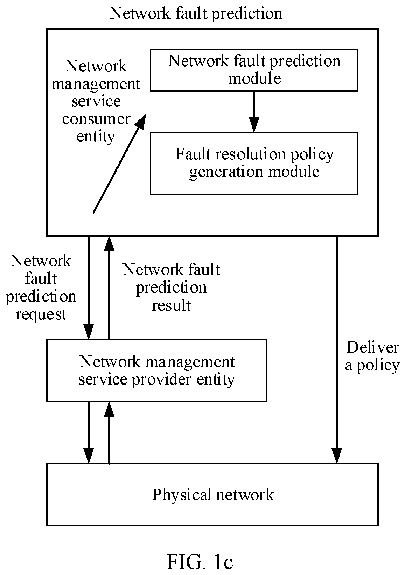

The foregoing application scenario is used as an example. Currently, synchronization between a network twin and a physical network mainly includes the following three cases. First, FIG. 1a is a diagram of an example of simulation according to an embodiment of this application. In a delay prediction scenario, because execution of a network management operation instruction is not involved, the network management operation instruction does not need to be sent to the physical network, and a network management service provider entity only needs to return an air interface delay prediction result to a network management service consumer entity. Second, FIG. 1b is a diagram of an example of simulation and network management operation instruction execution according to an embodiment of this application. In a scenario of verifying an energy saving solution, when the energy saving solution meets a requirement, the network management service consumer entity has a requirement of synchronizing the energy saving solution. Therefore, the network management service consumer entity performs simple comparison after receiving a verification result from the network management service provider entity. If the requirement is met, synchronization is performed. Third, FIG. 1c is a diagram of an example of other simulation and network management operation instruction execution according to an embodiment of this application. In a network fault prediction scenario, after receiving a network fault prediction result returned by the network management service provider entity, the network management service consumer entity needs to perform more complex processing than that in the second case, for example, generate a fault solution, and then synchronize the solution.

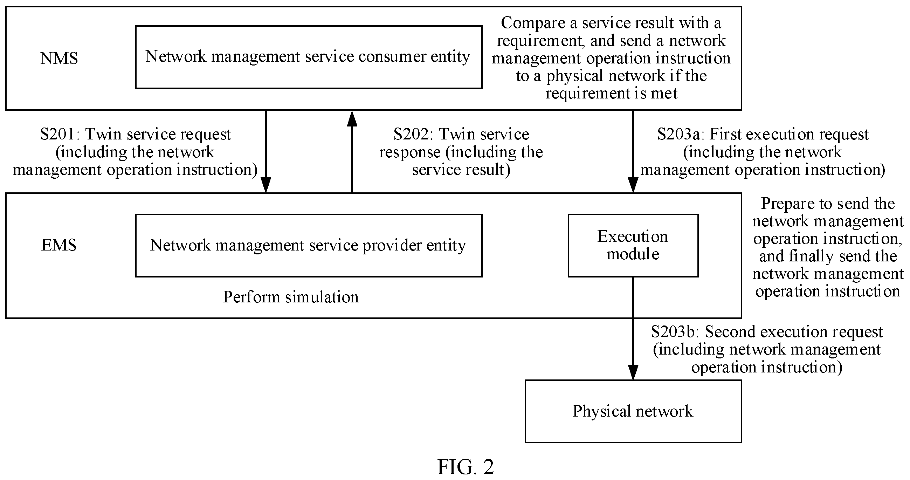

In general, for the network management service consumer entity, when simulation is currently performed by the network management service provider entity, after obtaining a simulation result, the network management service provider entity exchanges the simulation result with the network management service consumer entity. After determining that the simulation result meets a requirement, the network management service consumer entity indicates an execution module in the network management service provider entity to send the network management operation instruction to the physical network. An overall procedure is shown in FIG. 2, and the procedure may specifically include the following steps.

S201: A network management service consumer entity sends a twin service request to a network management service provider entity.

In this example, an example in which the network management service consumer entity is in a network management system (network management system, NMS) and the network management service provider entity is in an element management system (element management system, EMS) is used for description.

The twin service request is used for requesting the network management service provider entity to perform a twin service, for example, perform simulation. The twin service request includes a network management operation instruction.

S202: After receiving the twin service request, the network management service provider entity performs simulation based on the twin service request, and sends a twin service response to the network management service consumer entity.

The twin service response includes a service result, for example, which may be a simulation result herein.

S203a: After receiving the twin service response, the network management service consumer entity analyzes the service result, compares the service result with a requirement, and sends the network management operation instruction to a physical network if the requirement is met. In this case, the network management service consumer entity sends a first execution request to an execution module in the EMS.

The first execution request is used for requesting to send the network management operation instruction to the physical network. The first execution request includes the network management operation instruction.

S203b: After the execution module receives the first execution request, if the network management operation instruction needs to be sent to the physical network, the execution module prepares synchronization of the network management operation instruction, sends a second execution request to the physical network, and finally sends the network management operation instruction to the physical network for execution.

The second execution request is used for synchronizing the network management operation instruction to the physical network. The second execution request includes the network management operation instruction.

It can be learned that the network management service provider entity first performs simulation, and then returns the simulation result to the network management service consumer entity. The network management service consumer entity compares the result with the expected requirement of the network management service consumer entity, and then sends the network management operation instruction to the execution module based on a situation. In this case, the execution module starts to prepare to send the network management operation instruction to the physical network, and finally sends the network management operation instruction to the physical network. Therefore, the simulation performed by the network management service provider entity and the preparation performed by the execution module for executing the network management operation instruction are performed in serial, resulting in an increase in a delay. In addition, the network management service provider entity, the network management service consumer entity, and the physical network need to interact with each other for a plurality of times to execute the network management operation instruction. This causes a complex interaction procedure, a large quantity of interactions, and a long delay.

Therefore, embodiments of this application provide an execution solution for the network management operation instruction. The network management service provider entity is allowed to send the network management operation instruction to the physical network when the effect of the simulation meets the requirement, thereby reducing the plurality of interactions among the network management service consumer entity, the network management service provider entity, and the physical network, reducing a delay in executing the network management operation instruction, and improving execution efficiency of the network management operation instruction.

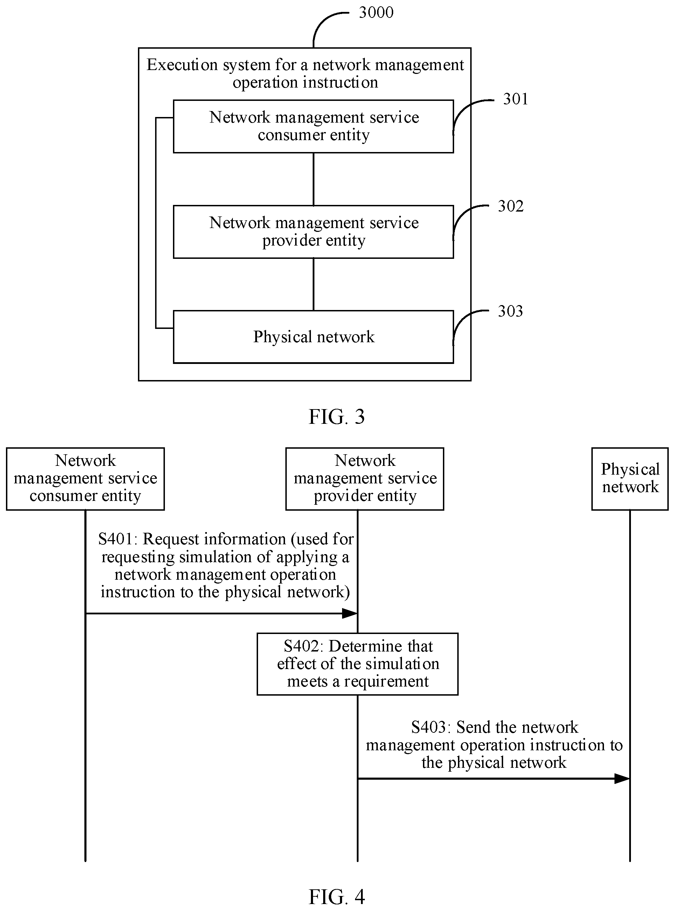

FIG. 3 is a diagram of an architecture of an execution system for a network management operation instruction according to an embodiment of this application. The system 3000 includes a network management service consumer entity 301, a network management service provider entity 302, and a physical network 303. The network management service consumer entity 301, the network management service provider entity 302, and the physical network 303 can interact with each other. For example, the network management service consumer entity 301 may be in an NMS, and the network management service provider entity 302 may be in an EMS. The network management service consumer entity 301 is configured to submit a twin service request (in other words, invoke a network twin service) and receive a twin service response. The network management service provider entity 302 is configured to provide the network twin service. For example, the network management service provider entity 302 may perform simulation based on the twin service request, and send the network management operation instruction to the physical network.

In this embodiment of this application, the network management service consumer entity 301 sends request information to the network management service provider entity 302. The request information is used for requesting simulation of applying the network management operation instruction to the physical network. The network management service provider entity 302 determines that effect of the simulation meets a requirement, and sends the network management operation instruction to the physical network 303. The network management service provider entity 302 is allowed to send the network management operation instruction to the physical network 303 when the effect of the simulation meets the requirement, thereby reducing a plurality of interactions among the network management service consumer entity 301, the network management service provider entity 302, and the physical network 303, reducing a delay in executing the network management operation instruction, and improving execution efficiency of the network management operation instruction.

Further, while simulating the network management operation instruction, the network management service provider entity 302 performs a preparation operation of sending the network management operation instruction to the physical network 303. After receiving the request information, the network management service provider entity 302 determines that the network management service consumer entity 301 allows the network management service provider entity 302 to send the network management operation instruction to the physical network 303 when the effect of the simulation meets the requirement. In this case, while simulating the network management operation instruction, the network management service provider entity 302 performs the preparation operation of sending the network management operation instruction to the physical network, to improve the execution efficiency of the network management operation instruction.

Further, the network management service provider entity 302 sends response information to the network management service consumer entity 301. The response information includes at least one of the simulation result and an execution result of the network management operation instruction, and the execution result of the network management operation instruction indicates whether the network management operation instruction is successfully sent to the physical network. The network management service provider entity 302 sends the response information to explicitly indicate the simulation result and/or the execution result of the network management operation instruction.

The following describes, based on the execution system for the network management operation instruction, an execution method for the network management operation instruction provided in embodiments of this application.

FIG. 4 is a schematic flowchart of an execution method for a network management operation instruction according to an embodiment of this application. For example, the method may include the following steps.

S401: A network management service consumer entity sends request information to a network management service provider entity. Correspondingly, the network management service provider entity receives the request information.

The request information is used for requesting simulation of applying the network management operation instruction to a physical network.

Different from the procedure shown in FIG. 2, the request information may include the network management operation instruction. In this embodiment, the network management operation instruction is carried in the request information, to be specific, the network management service consumer entity expects the network management service provider entity to directly send the network management operation instruction to the physical network when effect of the simulation meets a requirement.

For example, the network management operation instruction includes one of the following parameters: at least one physical network object, and a parameter configuration corresponding to each of the at least one physical network object. For example, the network management operation instruction indicates a specific configuration list deployed in the physical network, and each item in the list includes a to-be-deployed physical network object and a parameter configuration of the to-be-deployed physical network object. For example, in an energy saving scenario, when the network management operation instruction transferred by the network management service consumer entity is "verifying an energy saving solution", the physical network object is an identifier of a network element on which an energy saving solution needs to be deployed, and the parameter configuration is "a timing carrier shutdown switch=ON".

For example, the network management operation instruction may be a requirement known by the network management service consumer entity and/or the network management service provider entity, and the effect of the simulation and the expectation can be directly compared on the network management service provider entity. In this case, the network management service provider entity directly sends the network management operation instruction to the physical network.

S402: The network management service provider entity determines that the effect of the simulation meets the requirement.

After receiving the request information, the network management service provider entity performs, based on the request information, simulation of applying the network management operation instruction to the physical network, to obtain the effect of the simulation, and determines whether the effect of the simulation meets the requirement. The effect of the simulation refers to simulating effect of the network management operation instruction on the actual physical network, to determine whether the network management operation instruction can be applied to the physical network. The requirement indicates an indicator related to the executed simulation and the transferred network management operation instruction, and specifically includes a requirement on the effect of the network management operation instruction on the physical network. This requirement may also be referred to as a "network management operation instruction sending standard" or the like. This is not limited in this embodiment of this application. For example, in the energy saving scenario, when the network management operation instruction is "turning on the timing carrier shutdown switch", a corresponding requirement is "reducing energy consumption by 50%". If the effect of the simulation meets the requirement, to be specific, the effect of the simulation refers to simulating effect after the timing carrier shutdown switch is turned on, and obtained effect of the simulation is that the energy consumption can be reduced by 50%, it indicates that the network management operation instruction for which the simulation is performed can be sent to the physical network for execution.

The network management service provider entity may obtain the requirement from the network management service provider entity, the network management service consumer entity, or another entity.

S403: The network management service provider entity sends the network management operation instruction to the physical network.

For example, the network management service provider entity sends the network management operation instruction to the physical network. After receiving the network management operation instruction, the physical network executes the network management operation instruction.

According to the execution method for the network management operation instruction provided in this embodiment of this application, the network management service provider entity is allowed to send the network management operation instruction to the physical network when the effect of the simulation meets the requirement, thereby reducing a plurality of interactions among the network management service consumer entity, the network management service provider entity, and the physical network, reducing a delay in executing the network management operation instruction, and improving execution efficiency of the network management operation instruction.

In another embodiment, the network management service consumer entity may further explicitly indicate whether to send the network management operation instruction to the physical network when the effect of the simulation meets the requirement, to improve reliability of execution of the network management operation instruction.

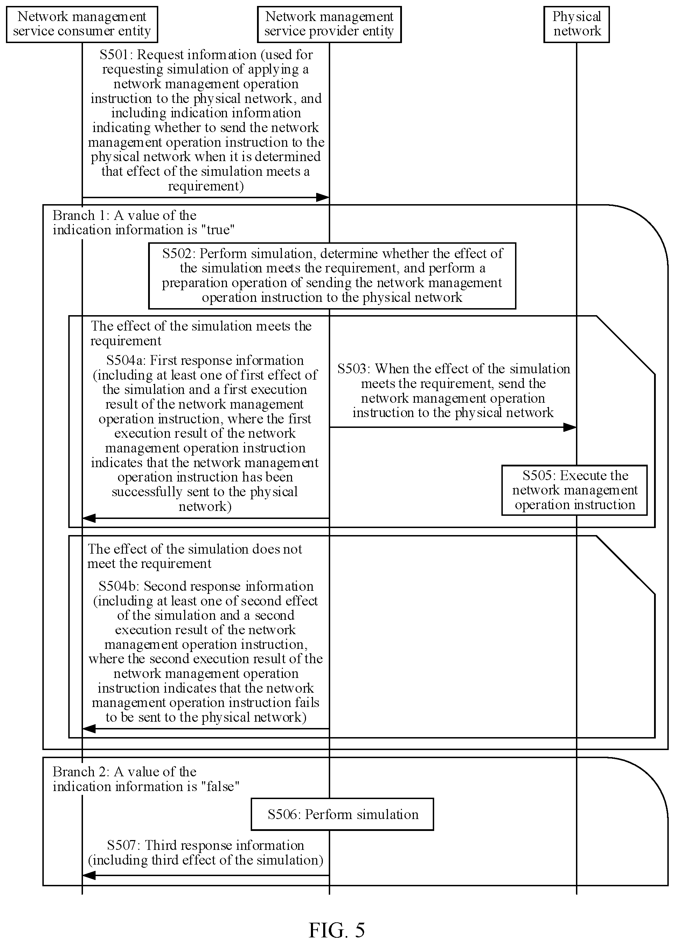

FIG. 5 is a schematic flowchart of another execution method for a network management operation instruction according to an embodiment of this application. For example, the method may include the following steps.

S501: A network management service consumer entity sends request information to a network management service provider entity. Correspondingly, the network management service provider entity receives the request information.

The request information is used for requesting simulation of applying the network management operation instruction to a physical network. The request information includes the network management operation instruction. For a definition of the network management operation instruction, refer to the foregoing descriptions. Details are not described herein again.

Further, the request information further includes indication information indicating whether to send the network management operation instruction to the physical network when it is determined that effect of the simulation meets a requirement. To be specific, an option of directly sending, by the network management service provider entity, the network management operation instruction to the physical network is added, the network management service consumer entity is allowed to choose whether the network management service provider entity can directly send the network management operation instruction to the physical network after the simulation is completed (in other words, the network management service consumer entity can autonomously define whether the network management service provider entity can directly send the network management operation instruction to the physical network, and the network management service provider entity can determine, based on the indication information, whether the network management service consumer entity expects directly sending of the network management operation instruction to the physical network), and the network management service provider entity does not return the effect of the simulation to the network management service consumer entity for processing.

Based on values of the indication information, there may be the following two branches.

Branch 1: The value of the indication information is "true (true)", indicating to send the network management operation instruction to the physical network when the effect of the simulation meets the requirement. If Branch 1 is used, to be specific, the network management service consumer entity chooses directly sending of the network management operation instruction to the physical network, a simulation phase and an execution preparation phase for the network management operation instruction may be performed in parallel, to reduce a delay in executing the network management operation instruction.

The branch may include the following steps.

S502: After receiving the request information, the network management service provider entity performs simulation based on the request information, determines whether the effect of the simulation meets the requirement, and performs a preparation operation of sending the network management operation instruction to the physical network.

The network management service provider entity performs simulation of applying the network management operation instruction to the physical network, to obtain the effect of the simulation, and determines whether the effect of the simulation meets the requirement. The requirement indicates an indicator related to the executed simulation and the transferred network management operation instruction, and specifically includes a requirement on effect of the network management operation instruction on the physical network. If the effect of the simulation meets the requirement, it indicates that the network management operation instruction for which the simulation is performed can be sent to the physical network for execution.

In this embodiment, the requirement is pre-stored, that is, pre-stored inside the network management service provider entity. The network management service provider entity may search for the corresponding requirement based on the executed simulation service and the transferred network management operation instruction. For example, in an energy saving scenario, when a parameter configuration of the network management operation instruction transferred by the network management service consumer entity is "turning on a timing carrier shutdown switch", the network management service provider entity may find, based on the network management operation instruction, that the related requirement is "reducing energy consumption by 50%".

In addition, when performing simulation based on the request information, the network management service provider entity performs the preparation operation of sending the network management operation instruction to the physical network. The simulation and the preparation operation are performed in parallel, so that execution efficiency of the network management operation instruction can be improved. For example, a synchronization preparation operation may be converting, via a converter, middleware, or a network configuration protocol similar to YANG or NetCONF, a network management operation instruction that needs to be delivered, to implement communication between a network management system and a network device.

Depending on whether the effect of the simulation meets the requirement, there are the following two cases.

In a first case, the effect of the simulation meets the requirement, and the following steps are included.

S503: The network management service provider entity sends the network management operation instruction to the physical network.

If the effect of the simulation meets the requirement, it indicates that the network management operation instruction for which the simulation is performed can be sent to the physical network for execution. Therefore, the network management service provider entity sends the network management operation instruction to the physical network.

For example, the network management service provider entity sends a synchronization request to the physical network. The synchronization request includes the network management operation instruction.

S504a: The network management service provider entity sends first response information to the network management service consumer entity.

The first response information includes at least one of first effect of the simulation and a first execution result of the network management operation instruction. The first execution result of the network management operation instruction indicates that the first effect of the simulation meets the requirement and the network management operation instruction has been successfully sent to the physical network.

S505: The physical network executes the network management operation instruction.

For example, the physical network receives the network management operation instruction, and executes the network management operation instruction.

In a second case, the effect of the simulation does not meet the requirement, and the following steps are included.

S504b: The network management service provider entity sends second response information to the network management service consumer entity.

If the effect of the simulation does not meet the requirement, it indicates that the network management operation instruction for which the simulation is performed cannot be sent to the physical network for execution. Therefore, the network management service provider entity sends the second response information to the network management service consumer entity. The second response information includes at least one of second effect of the simulation and a second execution result of the network management operation instruction. The second execution result of the network management operation instruction indicates that the effect of the simulation does not meet the requirement and the network management operation instruction is not sent or fails to be sent to the physical network.

Branch 2: The value of the indication information is "false (false)", indicating not to send the network management operation instruction to the physical network. In this case, the following steps may be included.

S506: The network management service provider entity performs simulation based on the request information.

The simulation process is the same as step S502, and details are not described herein again.

In this branch, because the indication information indicates not to send the network management operation instruction to the physical network, the network management service provider entity performs simulation based only on the request information, to obtain third effect of the simulation, and does not compare the third effect of the simulation with the requirement.

S507: The network management service provider entity sends third response information to the network management service consumer entity. Correspondingly, the network management service consumer entity receives the third response information.

The third response information includes only the third effect of the simulation, and does not include the execution result of the network management operation instruction or the second execution result of the network management operation instruction.

In another embodiment, the request information may include the indication information. In this case, when determining that the effect of the simulation meets the requirement, the network management service provider entity may send the network management operation instruction to the physical network. On the contrary, if the request information does not include the indication information, after obtaining the effect of the simulation, the network management service provider entity first returns the effect of the simulation to the network management service consumer entity, and the network management service consumer entity determines whether to send the network management operation instruction to the physical network.

According to the execution method for the network management operation instruction provided in this embodiment of this application, the network management service provider entity is allowed to send the network management operation instruction to the physical network when the effect of the simulation meets the requirement, thereby reducing a plurality of interactions among the network management service consumer entity, the network management service provider entity, and the physical network, reducing the delay in executing the network management operation instruction, and improving the execution efficiency of the network management operation instruction.

In addition, the indication information explicitly indicates that the network management service provider entity is allowed to send the network management operation instruction to the physical network when the effect of the simulation meets the requirement.

In the descriptions of the foregoing embodiment, the network management service provider entity may pre-store the requirement. In the following embodiment, the network management service consumer entity may provide the requirement for the network management service provider entity.

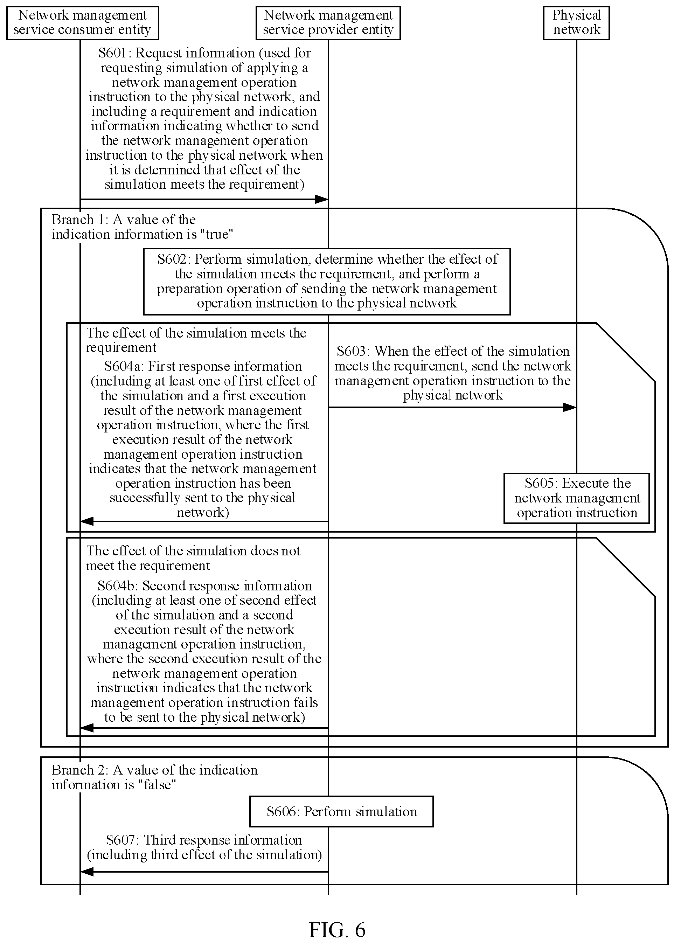

FIG. 6 is a schematic flowchart of still another execution method for a network management operation instruction according to an embodiment of this application. For example, the method may include the following steps.

S601: A network management service consumer entity sends request information to a network management service provider entity. Correspondingly, the network management service provider entity receives the request information.

The request information is used for requesting to perform, in a network twin, simulation of applying the network management operation instruction to a physical network. The request information includes the network management operation instruction and indication information. For definitions of the network management operation instruction and the indication information, refer to the foregoing descriptions.

Different from the embodiment shown in FIG. 5, the network management service consumer entity may customize a condition for sending the network management operation instruction to the physical network, and in this case, the request information may further include a requirement. The requirement herein may also be referred to as a target expected value or the like.

In an example, the network management service provider entity may not pre-store the requirement, and the network management service consumer entity includes the complete requirement by using the request information. For example, in an energy saving scenario, the network management service consumer entity may customize the requirement as "reducing energy consumption by more than 20%".

In a second example, the network management service provider entity may alternatively pre-store the requirement, and the network management service consumer entity includes update information of the requirement by using the request information. For example, in the energy saving scenario, when a parameter configuration of the network management operation instruction transferred by the network management service consumer entity is "turning on a timing carrier shutdown switch", the network management service provider entity may find, based on the network management operation instruction, that the pre-stored related requirement is "reducing energy consumption by 50%". The network management service consumer entity may customize the requirement as "reducing energy consumption by 60%". For example, the requirement is in a form of (object, condition, threshold), and the update information may be update information of at least one parameter of the object, the condition, and the threshold.

In a third example, the network management service provider entity may alternatively pre-store a part of parameters of the requirement, and the network management service consumer entity includes another part of the parameters of the requirement by using the request information. For example, the requirement is in a form of (object, condition, threshold), and the request information may carry at least one of the object, the condition, and the threshold in the requirement. If none of the object, the condition, and the threshold is carried in the request information, the part of the parameters of the requirement pre-stored by the network management service provider entity is used by default.

Based on values of the indication information, there may be the following two branches.

Branch 1: The value of the indication information is "true (true)", indicating to send the network management operation instruction to the physical network when effect of the simulation meets the requirement. In this case, the following steps may be included.

S602: After receiving the request information, the network management service provider entity performs simulation based on the request information, determines whether the effect of the simulation meets the requirement, and performs a preparation operation of sending the network management operation instruction to the physical network.

A difference between this step and step S502 in the embodiment shown in FIG. 5 lies in that, for different examples of the requirement, the network management service provider entity determines the requirement in different manners.

In the example, the network management service provider entity may not pre-store the requirement, and the network management service consumer entity includes the complete requirement by using the request information. In this case, the network management service provider entity determines, based on the requirement carried in the request information, whether the effect of the simulation meets the requirement.

In the second example, the network management service provider entity may alternatively pre-store the requirement, and the network management service consumer entity includes the update information of the requirement by using the request information. In this case, the network management service provider entity determines the requirement based on the update information of at least one parameter of the object, the condition, and the threshold, and information about another parameter pre-stored by the network management service provider entity, and determines, based on the determined requirement, whether the effect of the simulation meets the requirement.

In the third example, the network management service provider entity may alternatively pre-store a part of the parameters of the requirement, and the network management service consumer entity includes another part of the parameters of the requirement by using the request information. In this case, the network management service provider entity determines the requirement based on at least one parameter of the object, the condition, and the threshold that are carried in the request information, and another parameter pre-stored by the network management service provider entity, and determines, based on the determined requirement, whether the effect of the simulation meets the requirement.

Depending on whether the effect of the simulation meets the requirement, there are the following two cases.

In a case, the effect of the simulation meets the requirement, and the following steps are included.

S603: The network management service provider entity sends the network management operation instruction to the physical network.

For specific implementation of this step, refer to step S503 in the embodiment shown in FIG. 5. Details are not described herein again.

S604a: The network management service provider entity sends first response information to the network management service consumer entity.

The first response information includes at least one of first effect of the simulation and a first execution result of the network management operation instruction. The first execution result of the network management operation instruction indicates that the network management operation instruction has been successfully sent to the physical network.

For specific implementation of this step, refer to step S504a in the embodiment shown in FIG. 5. Details are not described herein again.

S605: The physical network executes the network management operation instruction.

For specific implementation of this step, refer to step S505 in the embodiment shown in FIG. 5. Details are not described herein again.

In a second case, the effect of the simulation does not meet the requirement, and the following steps are included.

S604b: The network management service provider entity sends second response information to the network management service consumer entity.

The second response information includes at least one of second effect of the simulation and a second execution result of the network management operation instruction. The second execution result of the network management operation instruction indicates that the second effect of the simulation does not meet the requirement and the network management operation instruction is not sent or fails to be sent to the physical network.

For specific implementation of this step, refer to step S504b in the embodiment shown in FIG. 5. Details are not described herein again.

Branch 2: The value of the indication information is "false (false)", indicating not to send the network management operation instruction to the physical network. In this case, the following steps may be included.

S606: The network management service provider entity performs simulation based on the request information.

For specific implementation of this step, refer to step S506 in the embodiment shown in FIG. 5. Details are not described herein again.

S607: The network management service provider entity sends third response information to the network management service consumer entity. Correspondingly, the network management service consumer entity receives the third response information.

The third response information includes a third effect of the simulation.

For specific implementation of this step, refer to step S507 in the embodiment shown in FIG. 5. Details are not described herein again.

According to the execution method for the network management operation instruction provided in this embodiment of this application, the network management service provider entity is allowed to send the network management operation instruction to the physical network when the effect of the simulation meets the requirement, thereby reducing a plurality of interactions among the network management service consumer entity, the network management service provider entity, and the physical network, reducing a delay in executing the network management operation instruction, and improving execution efficiency of the network management operation instruction.

In addition, the indication information explicitly indicates that the network management service provider entity is allowed to send the network management operation instruction to the physical network when the effect of the simulation meets the requirement.

In addition, the network management service consumer entity may provide a requirement for the network management service provider entity, so that the network management service provider entity may execute the network management operation instruction based on the requirement of the network management service consumer entity, to improve reliability and flexibility of a synchronization operation.

It may be understood that, in the foregoing embodiments, the method and/or the step implemented by the network management service provider entity may alternatively be implemented by a component (for example, a chip or a circuit) that can be used in the network management service provider entity, and the method and/or the step implemented by the network management service consumer entity may alternatively be implemented by a component (for example, a chip or a circuit) that can be used in the network management service consumer entity.

The foregoing mainly describes the solutions provided in embodiments of this application from a perspective of interaction between entities. Correspondingly, embodiments of this application further provide an execution apparatus for a network management operation instruction. The execution apparatus for the network management operation instruction is configured to implement the foregoing methods. The execution apparatus for the network management operation instruction may be the network management service provider entity in the foregoing method embodiments, or may be a component that can be used in the network management service provider entity. Alternatively, the execution apparatus for the network management operation instruction may be the network management service consumer entity in the foregoing method embodiments, or may be a component that can be used in the network management service consumer entity. It may be understood that, to implement the foregoing functions, the execution apparatus for the network management operation instruction includes a corresponding hardware structure and/or software module for performing the functions. A person skilled in the art should easily be aware that, in combination with units and algorithm steps of the examples described in embodiments disclosed in this specification, this application may be implemented in a form of hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, division into functional modules may be performed on the execution apparatus for the network management operation instruction based on the foregoing method embodiments. For example, division into functional modules may be performed based on corresponding functions, or two or more functions may be integrated into one processing unit. The integrated module may be implemented in a form of hardware, or may be implemented in a form of a software functional module. It should be noted that, in embodiments of this application, module division is an example, and is merely a logical function division. During actual implementation, another division manner may be used.

Based on a same concept as the foregoing execution method for the network management operation instruction, this application further provides the following execution apparatuses for the network management operation instruction.

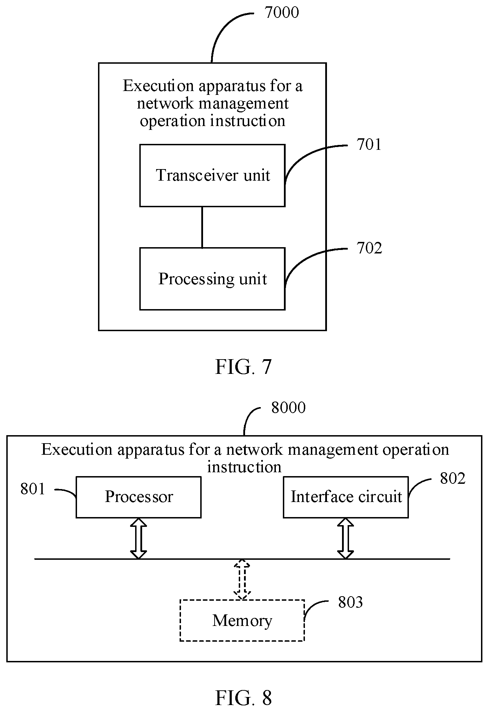

FIG. 7 is a diagram of a structure of an execution apparatus for a network management operation instruction according to an embodiment of this application. The execution apparatus 7000 for the network management operation instruction includes a transceiver unit 701 and a processing unit 702.

When the execution apparatus for the network management operation instruction is configured to implement functions of the network management service provider entity in the foregoing method embodiments, the transceiver unit 701 is configured to perform functions of the network management service provider entity in steps S401 and S403 in the embodiment shown in FIG. 4, and the processing unit 702 is configured to perform step S402 in the embodiment shown in FIG. 4. Alternatively, the transceiver unit 701 is configured to perform functions of the network management service provider entity in steps S501, S503, S504a, S504b, and/or S507 in the embodiment shown in FIG. 5, and the processing unit 702 is configured to perform step S502 or S506 in the embodiment shown in FIG. 5. Alternatively, the transceiver unit 701 is configured to perform functions of the network management service provider entity in steps S601, S603, S604a, S604b, and/or S607 in the embodiment shown in FIG. 6, and the processing unit 702 is configured to perform step S602 or S606 in the embodiment shown in FIG. 6.

When the execution apparatus for the network management operation instruction is configured to implement functions of the network management service consumer entity in the foregoing method embodiments, the transceiver unit 701 is configured to perform functions of the network management service consumer entity in step S401 in the embodiment shown in FIG. 4. Alternatively, the transceiver unit 701 is configured to perform functions of the network management service consumer entity in steps S501, S504a, S504b, and/or S507 in the embodiment shown in FIG. 5. Alternatively, the transceiver unit 701 is configured to perform functions of the network management service consumer entity in steps S601, S604a, S604b, and/or S607 in the embodiment shown in FIG. 6.

For specific implementations of the transceiver unit 701 and the processing unit 702, refer to the descriptions in the foregoing method embodiments. Details are not described herein again.

According to the execution apparatus for the network management operation instruction provided in this embodiment of this application, the network management service provider entity is allowed to send the network management operation instruction to a physical network when a simulation result meets a requirement, thereby reducing a plurality of interactions among the consumer entity, the provider entity, and the physical network, reducing a delay in executing the network management operation instruction, and improving execution efficiency of the network management operation instruction.

FIG. 8 is a diagram of a structure of another execution apparatus for a network management operation instruction according to an embodiment of this application. The execution apparatus 8000 for the network management operation instruction includes a processor 801 and an interface circuit 802, and may further include a memory 803 (represented by dashed lines in the figure). The processor 801 and the interface circuit 802 are coupled to each other. It may be understood that the interface circuit 802 may be a transceiver or an input/output interface. The memory 803 is configured to store instructions executed by the processor 801, store input data needed by the processor 801 to run the instructions, or store data generated after the processor 801 runs the instructions. The processor 801 is configured to implement a function of the processing unit 702 in the embodiment shown in FIG. 7, and the interface circuit 802 is configured to implement a function of the transceiver unit 701 in the embodiment shown in FIG. 7.

When the execution apparatus for the network management operation instruction is a chip used in a network management service provider entity, the chip implements a function of the network management service provider entity in the foregoing method embodiments. The chip receives information from another module (for example, a radio frequency module or an antenna) in the network management service provider entity, where the information is sent by a network management service consumer entity to the network management service provider entity. Alternatively, the chip sends information to another module (for example, a radio frequency module or an antenna) in the network management service provider entity, where the information is sent by the network management service provider entity to the network management service consumer entity.

When the execution apparatus for the network management operation instruction is a chip used in the network management service consumer entity, the chip implements a function of the network management service consumer entity in the foregoing method embodiments. The chip receives information from another module (for example, a radio frequency module or an antenna) in the network management service consumer entity, where the information is sent by the network management service provider entity to the network management service consumer entity. Alternatively, the chip sends information to another module (for example, a radio frequency module or an antenna) in the network management service consumer entity, where the information is sent by the network management service consumer entity to the network management service provider entity.

In addition, it should be noted that the transceiver unit and/or the processing unit may be implemented by using a virtual module. For example, the processing unit may be implemented by using a software functional unit or a virtual apparatus, and the transceiver unit may be implemented by using a software function or a virtual apparatus. Alternatively, the processing unit or the transceiver unit may be implemented by using a physical apparatus. For example, if the apparatus is implemented by using a chip/chip circuit, the transceiver unit may be an input/output circuit and/or a communication interface, and performs an input operation (corresponding to the foregoing receiving operation) and an output operation (corresponding to the foregoing sending operation); and the processing unit is an integrated processor, a microprocessor, or an integrated circuit.

Division into modules in this application is an example, is merely logical function division. There may be other division during actual implementation. In addition, functional modules in examples of this application may be integrated into one processor, each of the modules may exist alone physically, or two or more modules may be integrated into one module. The integrated module may be implemented in a form of hardware, or may be implemented in a form of a software functional module.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any conventional processor.

An embodiment of this application further provides a computer-readable storage medium. The computer-readable storage medium stores a computer program or instructions. When the computer program or the instructions are executed, the methods in the foregoing embodiments are implemented.

An embodiment of this application further provides a computer program product including instructions. When the instructions are run on a computer, the computer is enabled to perform the methods in the foregoing embodiments.

An embodiment of this application further provides an execution system for a network management operation instruction, including the foregoing execution apparatus for the network management operation instruction.

An embodiment of this application further provides a circuit. The circuit is coupled to a memory, and the circuit is configured to perform the methods shown in the foregoing embodiments. The circuit may include a chip circuit.

It should be noted that one or more of the foregoing units or units may be implemented by software, hardware, or a combination of software and hardware. When any one of the foregoing units or units is implemented by software, the software exists in a form of computer program instructions, and is stored in the memory. A processor may be configured to execute the program instructions and implement the foregoing method procedures.

In this application, the processor may be a general-purpose processor, a digital signal processor, an application-specific integrated circuit, a field programmable gate array or another programmable logic device, a discrete gate or transistor logic device, or a discrete hardware component, and may implement or perform methods, steps, and logical block diagrams that are disclosed in this application. The general-purpose processor may be a microprocessor, any conventional processor, or the like. The steps of the methods disclosed with reference to this application may be directly performed and completed by a hardware processor, or may be performed and completed by a combination of hardware and a software module in the processor.

The processor may be built in a system on chip (system on chip, SoC) or an ASIC, or may be an independent semiconductor chip. In addition to a core for executing software instructions to perform an operation or processing, the processor may further include a necessary hardware accelerator, for example, a field programmable gate array (field programmable gate array, FPGA), a programmable logic device (programmable logic device, PLD), or a logic circuit that implements a special-purpose logic operation.

When the foregoing units or units are implemented by hardware, the hardware may be any one or any combination of a CPU, a microprocessor, a digital signal processing (digital signal processing, DSP) chip, a microcontroller unit (microcontroller unit, MCU), an artificial intelligence processor, an ASIC, a SoC, an FPGA, a PLD, a special-purpose digital circuit, a hardware accelerator, or a non-integrated discrete device. The hardware may run necessary software or does not depend on software to perform the foregoing method procedures.

Optionally, an embodiment of this application further provides a chip system, including at least one processor and an interface. The at least one processor is coupled to a memory through the interface. When the at least one processor runs a computer program or instructions in the memory, the chip system is enabled to perform the method in any one of the foregoing method embodiments. Optionally, the chip system may include a chip, or may include a chip and another discrete device. This is not specifically limited in this embodiment of this application.

In this application, the memory may be a non-volatile memory, for example, a hard disk drive (hard disk drive, HDD) or a solid-state drive (solid-state drive, SSD), or may be a volatile memory (volatile memory), for example, a random access memory (random access memory, RAM). The memory is any other medium that can carry or store expected program code in a form of an instruction or a data structure and that can be accessed by a computer, but is not limited thereto. The memory in this application may alternatively be a circuit or any other apparatus that can implement a storage function, and is configured to store program instructions and/or data.

It should be understood that, in descriptions of this application, unless otherwise specified, "/" indicates an "or" relationship between associated objects. For example, A/B may indicate A or B. A and B may be singular or plural. In addition, in the descriptions of this application, unless otherwise specified, "a plurality of" means two or more. "At least one of the following items (pieces)" or a similar expression thereof indicates any combination of these items, including a singular item (piece) or any combination of plural items (pieces). For example, at least one item (piece) of a, b, or c may indicate: a, b, c, a and b, a and c, b and c, or a, b, and c, where a, b, and c may be singular or plural. In addition, to clearly describe the technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference. In addition, in embodiments of this application, a word like "example" or "for example" is used to represent giving an example, an illustration, or a description. Any embodiment or design scheme described as an "example" or "for example" in embodiments of this application should not be explained as being more preferred or advantageous than another embodiment or design scheme. Exactly, use of the word like "example" or "for example" is intended to present a related concept in a specific manner for ease of understanding.

All or some of the foregoing embodiments may be implemented by using software, hardware, firmware, or any combination thereof. When a software program is used to implement embodiments, all or some of embodiments may be implemented in a form of a computer program product. The computer program product includes one or more computer instructions. When the computer program instructions are loaded and executed on a computer, all or some of the procedures or functions according to embodiments of this application are generated. The computer may be a general-purpose computer, a special-purpose computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, like a server or a data center, integrating one or more usable media. The usable medium may be a magnetic medium (for example, a floppy disk, a hard disk, or a magnetic tape), an optical medium (for example, a digital versatile disc (digital versatile disc, DVD)), a semiconductor medium (for example, a solid-state drive (solid-state drive, SSD)), or the like.

Although this application is described with reference to embodiments, in a process of implementing this application that claims protection, a person skilled in the art may understand and implement another variation of the disclosed embodiments by viewing the accompanying drawings, disclosed content, and appended claims. In the claims, "comprising" (comprising) does not exclude another component or another step, and "a" or "one" does not exclude a meaning of plurality. A single processor or another unit may implement several functions enumerated in the claims. Some measures are recorded in dependent claims that are different from each other, but this does not mean that these measures cannot be combined to produce a good effect.

It may be understood that various numbers in embodiments of this application are merely used for distinguishing for ease of description, and are not used to limit the scope of embodiments of this application. Sequence numbers of the foregoing processes do not mean an execution sequence, and the execution sequence of the processes should be determined based on functions and internal logic of the processes.

In the foregoing embodiments, the description of each embodiment has respective focuses. For a part that is not described in detail in an embodiment, refer to related descriptions in other embodiments.

Components in the apparatus in embodiments of this application may be combined, divided, and deleted based on an actual requirement. A person skilled in the art may combine different embodiments or features of different embodiments described in this specification.

The foregoing embodiments are merely for describing the technical solutions in this application, but not for limiting this application. Although this application is described in detail with reference to the foregoing embodiments, a person of ordinary skill in the art should understand that modifications can be made to the technical solutions described in the foregoing embodiments, or equivalent replacements can be made to some technical features thereof without departing from the scope of the technical solutions of embodiments of this application.

In this application, without a logical contradiction, mutual reference can be made between examples. For example, mutual reference can be made between methods and/or terms in method embodiments, mutual reference can be made between functions and/or terms in apparatus embodiments, and mutual reference can be made between functions and/or terms in apparatus examples and method examples.

It is clear that a person skilled in the art can make various modifications and variations to this application without departing from the scope of this application. This application is intended to cover these modifications and variations of this application provided that they fall within the scope of protection defined by the following claims and their equivalent technologies.

## Claims

1. An execution method for a network management operation instruction, wherein the method comprises:
receiving request information, wherein the request information is used for requesting simulation of applying the network management operation instruction to a physical network;
determining that effect of the simulation meets a requirement; and
sending the network management operation instruction to the physical network.

2. The method according to claim 1, wherein the request information comprises indication information indicating to send the network management operation instruction to the physical network when it is determined that the effect of the simulation meets the requirement.

3. The method according to claim 1 or 2, wherein the requirement is pre-stored.

4. The method according to claim 1 or 2, wherein the request information further comprises the requirement.

5. The method according to any one of claims 1 to 4, wherein the network management operation instruction comprises one of the following parameters: at least one physical network object, and a parameter configuration corresponding to each of the at least one physical network object.

6. The method according to any one of claims 1 to 5, wherein the method further comprises:
while simulating the network management operation instruction, performing a preparation operation of sending the network management operation instruction to the physical network.

7. The method according to any one of claims 1 to 6, wherein the method further comprises:
sending response information, wherein the response information comprises at least one of the effect of the simulation and an execution result of the network management operation instruction, and the execution result of the network management operation instruction indicates whether the network management operation instruction is successfully sent to the physical network.

8. An execution method for a network management operation instruction, wherein the method comprises:
determining request information, wherein the request information is used for requesting simulation of applying the network management operation instruction to a physical network, and indicates to send the network management operation instruction to the physical network when it is determined that effect of the simulation meets a requirement; and
sending the request information.

9. The method according to claim 8, wherein the request information comprises indication information indicating to send the network management operation instruction to the physical network when it is determined that the effect of the simulation meets the requirement.

10. The method according to claim 8 or 9, wherein the requirement is pre-stored.

11. The method according to any one of claims 8 to 10, wherein the request information further comprises the requirement.

12. The method according to any one of claims 8 to 11, wherein the network management operation instruction comprises one of the following parameters: at least one physical network object, and a parameter configuration corresponding to each of the at least one physical network object.

13. The method according to any one of claims 8 to 12, wherein the method further comprises:
receiving response information, wherein the response information comprises at least one of the effect of the simulation and an execution result of the network management operation instruction, and the execution result of the network management operation instruction indicates whether the network management operation instruction is successfully sent to the physical network.

14. An execution method for a network management operation instruction, wherein the method comprises:
sending, by a network management service consumer entity, request information to a network management service provider entity, wherein the request information is used for requesting simulation of applying the network management operation instruction to a physical network;
determining, by the network management service provider entity, that effect of the simulation meets a requirement; and
sending, by the network management service provider entity, the network management operation instruction to the physical network.

15. An execution apparatus for a network management operation instruction, wherein the apparatus comprises a module configured to implement the method according to any one of claims 1 to 7, or comprises a module configured to implement the method according to any one of claims 8 to 13.

16. An execution apparatus for a network management operation instruction, comprising a processor, a memory, and instructions that are stored in the memory and that are run on the processor, wherein when the instructions are run, the execution apparatus for the network management operation instruction is caused to perform the method according to any one of claims 1 to 7, or perform the method according to any one of claims 8 to 13.

17. A network management system, comprising a network management service provider entity and a network management service consumer entity, wherein the network management service provider entity comprises a module configured to perform the method according to any one of claims 1 to 7, and the network management service consumer entity comprises a module configured to implement the method according to any one of claims 8 to 13.

18. A computer-readable storage medium, wherein the computer-readable storage medium comprises instructions, and when the instructions are run by a processor, the method according to any one of claims 1 to 13 is implemented.

19. A computer program product, wherein the computer program product comprises related program instructions, and when the related program instructions are executed, the method according to any one of claims 1 to 13 is implemented.
